# EUROPÄISCHE PATENTSCHRIFT

(11) **EP 0 685 714 B1**
(45) Veröffentlichungstag und Bekanntmachung des Hinweises auf die Patenterteilung: **28.07.1999**
(21) Anmeldenummer: 95107885.6
(22) Anmeldetag: 24.05.1995
(51) Int. Cl.: G01G 17/00

(54) **Vorrichtung zum Wiegen von Hartgelatinekapseln**
Device for weighing hard gelatin capsules
Dispositif pour le pesage de capsules en gélatine dure

(30) Priorität: 03.06.1994 DE 4419488
(43) Veröffentlichungstag der Anmeldung: 06.12.1995
(73) Patentinhaber: Harro Höfliger Verpackungsmaschinen GmbH, 71573 Allmersbach im Tal (DE)
(72) Erfinder: Reiser, Manfred, D-71364 Winnenden-Hertmannsweiler (DE)
(74) Vertreter: Müller, Hans, Dipl.-Ing.

(56) Entgegenhaltungen:
- EP-A- 0 181 946
- WO-A-87/00621
- DE-A- 3 401 191
- DE-A- 4 325 569
- GB-A- 2 215 476
- US-A- 4 223 751
- Robert Bosch Firmenprospekt, Mai 1990, "Capsule Checking System KKE 1500"

## Beschreibung

### TECHNISCHES GEBIET

Die Erfindung betrifft eine Vorrichtung zum Wiegen von leeren und mit einer vorgegebenen Menge an Füllgut gefüllten und verschlossenen Hartgelatinekapseln. Derartige Kapseln finden als Arzneimittel ein breites Verwendungsfeld. Eine Kapsel kann dabei auch unterschiedliche Medikamentenwirkstoffe enthalten. Diese Wirkstoffe können als Flüssigkeit, Tabletten, Hart- und Weichgelatinekapseln, Pulver oder als Pellets oder als Kombinationen der verschiedenen Komponenten vorhanden sein.

### STAND DER TECHNIK

Aus der EP-A-0 181 946 ist eine Vorrichtung zum Prüfen von insbesondere Tabletten durch Wiegen bekannt, mit der lediglich stichprobenweise gewogen wird. Zur Entnahme von Stichproben wird mit Hilfe eines in den produzierten Tabletten-Förderstrom hineingeschwenkten Entnahmearmes jeweils eine Tablette entnommen, die dann über eine Rutsche in einen auf einer Waage positionierten Behälter hineinfällt.

Weiter sind eigenständige Systeme bekannt, die ab Vorratstrichter alle Hartgelatinekapseln verwiegen und nach gut und schlecht klassifizieren.

Aufgrund der hohen Taktfrequenz von Kapselherstellmaschinen und dem relativ kleinen Gewicht der Kapseln beansprucht der Wiegevorgang zum Überprüfen des Gewichts der gefüllten und verschlossenen Kapseln einen relativ großen Aufwand. Um Störeinflüsse von der Kapselherstellmaschine auf die Wiegeeinrichtung zu vermeiden, ist es bekannt, diese Wiegeeinrichtung separat zur eigentlichen Kapselherstellmaschine zu gründen. Bei einem vorbekannten, von der Robert Bosch GmbH, DE, vertriebenen "Capsule Checking System KKE 1500" werden mittels eines hin und her sich bewegenden Schiebers die zu wiegenden Kapseln nacheinander von der Seite her auf die Lagerplatte der Wiegeeinrichtung aufgeschoben. Dieser Schieber ist unterhalb eines hohlzylindrischen Rohres positioniert. Dieses Rohr führt in einen Behälter hinein, in den die von der Kapselherstellmaschine ausgestoßenen, mit Füllgut gefüllten und verschlossenen Kapseln lose hineinfallen. Durch senkrechtes Hin- und Herbewegen des Rohres durch den Boden dieses Behälters hindurch rutschen Kapseln nacheinander in das Rohr. Das Rohr besitzt einen derartigen Innendurchmesser, daß die Kapseln in Längsrichtung übereinanderliegend im Rohr positioniert werden. Unten aus dem Rohr fallen nacheinander die einzelnen Kapseln heraus, die dann einzeln von dem Schieber seitlich auf die Wiegeeinrichtung geschoben werden.

Die Kapseln werden mit ihrer dickeren oder dünneren Querschnittshälfte nach vorn ausgerichtet auf die Lagerplatte der Wiegeeinrichtung geschoben. Dadurch treten unterschiedliche Reibungskräfte auf, die von der Seite auf die Lagerplatte einwirken und dadurch nur schlecht größenmäßig vorherbestimmt und damit durch die in der Wiegeeinrichtung vorhandene elektronische Kompensationsschaltung eliminiert werden können. Der Störeinfluß beim Wiegen der Kapseln kann daher nur unvollständig ermittelt und damit auch nur bedingt unwirksam gemacht werden.

### DARSTELLUNG DER ERFINDUNG

Der Erfindung liegt die Aufgabe zugrunde, ausgehend vom vorgenannten Stand der Technik eine verbesserte Möglichkeit zum Überprüfen des Gewichts von auf einer Hartgelatinekapselmaschine befüllten Kapseln anzugeben.

Diese Erfindung ist durch die Merkmale des Patentanspruchs 1 gegeben. Wesentlich bei der erfindungsgemäßen Vorrichtung ist das Merkmal, daß die Übergabevorrichtung, durch die die Kapseln nacheinander an die Wiegeeinrichtung übergeben werden, so zur Wiegeeinrichtung positioniert ist, daß die Übergaberichtung der Kapseln auf die Wiegeeinrichtung senkrecht zur Auflagerfläche der Wiegeplatten ausgerichtet ist. Die Kapseln können folglich in Richtung der Auslenkrichtung der Wiegeplatte auf dieselbe aufgelagert werden. Der Störeinfluß, der durch den eigentlichen Auflagerungsvorgang hervorgerufen wird, ist in seiner Größe und seinem zeitlichen Ablauf gut vorherzubestimmen. Dies hat zur Folge, daß durch die Kompensationsschaltung der Wiegeeinrichtung dieser Störeinfluß entsprechend gut berücksichtigt, das heißt in seinem Einfluß auf das Wiegeergebnis eliminiert werden kann. Darüber hinaus besitzt die Übergabevorrichtung einen endlos umlaufenden Förderer, der zumindest eine Aufnahmeeinrichtung und zumindest eine Abgabeeinrichtung für aufzunehmende bzw. abzugebende Kapseln besitzt. Die durch Umlaufbewegung des Förderers verursachten, auf die Umgebung abstrahlenden dynamischen Kräfte sind bei einem endlos umlaufenden Förderer im Unterschied zu einer sich hin und her bewegenden Transportvorrichtung sehr gering. Dadurch ist es möglich, die erfindungsgemäße Übergabevorrichtung zusammen mit dem Wiegesystem zu gründen. Auch ist die konstruktive Baugröße eines derartigen Förderers wünschenswert klein, so daß die gesamte Hartgelatinekapsel-Wiegemaschine entsprechend klein gebaut werden kann. Aufgrund der Tatsache, daß sich Hartgelatinekapseln in einem gewissen Maß zusammendrücken lassen, können die Kapseln daher in der Aufnahmeeinrichtung des Förderers klemmend gehalten werden.

Eine konstruktiv günstige Möglichkeit für eine derartige klemmende Halterung von Kapseln an dem Förderer, mit der der Störeinfluß der durch die Übergabe auf den Förderer einwirkenden Kräfte extrem gering gehalten werden kann, zeichnet sich wie folgt aus. Die Übergabevorrichtung besitzt einen Führungskanal, der zwischen dem hohlen Zuführungsrohr und der Aufnahmeeinrichtung des endlos umlaufenden Förderers positioniert ist. Mittels eines Schubgliedes lassen sich vor dem Führungskanal positionierte Kapseln nacheinander durch den Kanal hindurchschieben und in eine bereitstehende Aufnahmeeinrichtung des Förderers hineintransportieren. Die Breite des Führungskanals ist dabei kleiner als der Durchmesser der Kapseln, so daß die Kapseln längs dem Führungskanal zusammengedrückt sind. Die Breite des Führungskanals ist außerdem kleiner als die Breite der Aufnahmeeinrichtung des Förderers, so daß die Kapseln in der Aufnahmeeinrichtung des Förderers weniger stark als in dem Führungskanal zusammengedrückt sind. Die Kapseln entspannen sich in der Aufnahmeeinrichtung daher etwas, aber nicht vollständig. Dadurch sind die Kapseln auch noch in der Aufnahmeeinrichtung klemmend gelagert. Bei ihrem Hineinschieben in die Aufnahmeeinrichtung reiben die Kapseln nicht an den seitlichen Begrenzungswänden der Aufnahmeeinrichtung entlang sondern fliegen gleichsam frei in die Aufnahmeeinrichtung hinein, dehnen sich in der Aufnahmeeinrichtung aus und halten sich dann klemmend in der Aufnahmeeinrichtung fest.

In der Übergabevorrichtung kann eine Verschließvorrichtung für den Führungskanal vorhanden sein. Mit dieser Verschließvorrichtung, die ein Schiebeglied sein kann, kann der Eintritt von Kapseln in den Führungskanal freigegeben beziehungsweise nicht freigegeben werden. Bei verschlossener Verschließvorrichtung wird verhindert, daß sich eine vor dem Führungskanal positionierte Kapsel schiefstellen und sich dadurch in dem Führungskanal verklemmen kann, beziehungsweise durch die Schiefstellung nicht korrekt in die Aufnahmeeinrichtung transportiert werden kann. Die Verschließvorrichtung befindet sich daher nur dann in ihrer AUF-Stellung, wenn eine Kapsel mittels des Schubgliedes durch den Führungskanal hindurchgeschoben werden soll.

Eine sinnvolle Möglichkeit für die Übergabe der Kapseln von dem Förderer auf die Wiegeeinrichtung ist folgendermaßen gegeben. Im Bereich der Abgabeeinrichtung des Förderers ist ein hin und her schwenkbares Sperrglied positioniert. Dieses Sperrglied wird so in die kontinuierlich umlaufende Bahn des Förderers und damit auch in die Bewegungsrichtung der die Kapsel tragenden Aufnahmeeinrichtung gelenkt, daß nur die weitere Bewegung der Aufnahmeeinrichtung in Richtung des sich fortbewegenden Förderers möglich, nicht aber die weitere Bewegung der in dieser Aufnahmeeinrichtung vorhandenen Kapsel in dieser Richtung möglich ist. Die Kapsel erfährt damit eine relative Bewegung zur Bewegungsrichtung der Aufnahmeeinrichtung, die bewirkt, daß die Kapsel aus der Aufnahmeeinrichtung herausbewegt wird.

Sofern die Kapsel bei ihrer Relativbewegung aus dem Förderer heraus sich in Ruhe befindet, weil das sie aus dem Förderer herausbewegende Sperrglied während dieses Zustandes ebenfalls in Ruhe ist, besteht die Möglichkeit, daß die Kapsel im freien Fall auf die Lagerplatte der Wiegeeinrichtung herabfallen kann. Da das Gewicht der jeweils auf die Wiegeeinrichtung fallenden Kapsel weitestgehend bekannt ist und auch der Fallweg höhenmäßig vorgegeben ist, läßt sich der Störeinfluß für die Wiegeeinrichtung durch das Auffallen einer Kapsel auf die Wiegeeinrichtung mit einer großen Genauigkeit kompensieren. Durch variable Ausrichtung des Förderers zur Lagerplatte kann problemlos sichergestellt werden, daß auch bei unterschiedlich großen Kapseln immer ein gleichgroßer Fallweg vorhanden ist.

Eine extrem kleine Fallhöhe bewirkt nicht nur, daß der von einer Kapsel auf die Wiegeeinrichtung ausgeübte Störeinfluß entsprechend klein bleibt, sondern ermöglicht auch, daß der Förderer mit dem vorauslaufenden Teil der Aufnahmeeinrichtung die auf der Lagerplatte der Wiegeeinrichtung auflagernde Kapsel wegschieben kann. Die als nächstes zu wiegende Kapsel erreicht die Lagerplatte erst, nachdem der Störeinfluß durch die weggeschobene Kapsel von der Wiegeeinrichtung kompensiert wurde.

Die in den Förderer hineintransportierten Kapseln werden in einem im Stand der Technik an sich bekannten hohlzylindrischen Rohr zugeführt. In diesem Rohr sind die Kapseln in Längsrichtung übereinanderliegend positioniert. Dieses Rohr kann mit einem Behälter verbunden sein, in dem die Kapseln lose eingefüllt sind. Um eine Hin- und Herbewegung des Rohrs in Rohrlängsrichtung zu ermöglichen, was für den Einfüllvorgang von Kapseln in das Rohr hinein sinnvoll ist, kann das Rohr teleskopartig ausgebildet sein. Dadurch wird ermöglicht, daß das untere Ende des Rohrs, das am Förderer endet, in Ruhe bleiben kann.

Das vorstehend beschriebene Rohr kann auch an der Kapsel-Ausgabestation der Kapselfüllmaschine positioniert sein. Die von der Maschine ausgestoßenen Kapseln können dann direkt in das Rohr hinein übergeben werden. Ein zwischengeschalteter Behälter mit lose einsitzenden Kapseln wäre dann überflüssig. Dies eröffnet die Möglichkeit, daß eine Rückkoppelung des in der Wiegeeinrichtung gemessenen Gewichts auf den Füllvorgang der Herstellmaschine erfolgen kann. Zwischen der Wiegeeinrichtung und der Füllmaschine sind eine vorgegebene Anzahl von Kapseln vorhanden, so daß direkter Einfluß auf die Füllmenge der jeweils in das Kapselherstellmaschine gefüllten Kapseln genommen werden kann. Sofern die Kapseln lose in großer Menge in einem Behälter zwischengelagert werden, so wie dies im Stand der Technik bekannt ist, ist diese Rückkoppelung praktisch nicht möglich.

Auf ihrem Weitertransport von der Wiegeeinrichtung in den jeweils vorgesehenen Sammelbehälter können die von der Wiegeeinrichtung als "schlecht" festgestellte Kapseln ausgesondert und in einen entsprechenden Schlecht-Sammelbehälter hinein- transportiert werden. Dieses wahlweise Transportieren in einen Gut-Sammelbehälter beziehungsweise in einen Schlecht-Sammelbehälter kann in vorteilhafter Weise mittels einer Transportweiche erfolgen, die entsprechend dem Wiegeergebnis für die einzelne Kapsel den Weg in den Gut-Sammelbehälter beziehungsweise in den Schlecht-Sammelbehälter freigibt. Über eine Überwachungseinrichtung kann festgestellt werden, ob eine für "schlecht" erkannte Kapsel ihren Weg in den Schlecht-Sammelbehälter findet beziehungsweise gefunden hat, oder ob diese Kapsel sich irgendwo auf dem Transportweg hinter der Wiegeeinrichtung verklemmt oder sonstwie aufgestaut hat.

Diese Überwachungseinrichtung kann eine optische Sensoreinrichtung wie z.B. ein optischer Lichttaster sein, der damit auch kontrollieren kann, ob sich eine als "schlecht" erkannte Kapsel auch in den Schlecht-Sammelbehälter hineinbewegt. Damit kann dann gleichzeitig auch das korrekte Verstellen der Transportweiche festgestellt werden.

Weitere Merkmale und Vorteile der Erfindung ergeben sich durch die in den Ansprüchen ferner angegebenen Merkmale sowie durch das nachstehende Ausführungsbeispiel.

### KURZE BESCHREIBUNG DER ZEICHNUNG

Die Erfindung wird im folgenden anhand des in der Zeichnung. dargestellten Ausführungsbeispiels näher beschrieben und erläutert. Es zeigt:
- Fig. 1: eine teilweise geschnittene, schematisierte Seitenansicht der in Bewegungsrichtung vor einer Wiegeeinrichtung positionierten Übergabevorrichtung nach der Erfindung,
- Fig. 2a: eine perspektivische Teilansicht der Übergabevorrichtung von Fig. 1,
- Fig. 2b: eine Teilansicht einer in der Übergabevorrichtung vorhandenen Verschließvorrichtung,
- Fig. 3, 4 und 5: Schnittdarstellungen mit nacheinander folgenden unterschiedlichen Stellungen der jeweils übergebenen Kapsel bei der Einrichtung nach Fig. 2,
- Fig. 6: eine Seitenansicht eines Teilausschnittes der Vorrichtung gemäß Fig. 1 zu einem Zeitpunkt, an dem eine Kapsel auf der Wiegeeinrichtung aufliegt,
- Fig. 7: eine Darstellung entsprechend Fig. 6 zu einem Zeitpunkt, an dem die verwogene Kapsel abgeschoben und eine nachfolgende Kapsel in dem Bereich der Wiegeeinrichtung eintrifft, und
- Fig. 8: eine Darstellung entsprechend Fig. 7 zu einem Zeitpunkt, an dem eine Kapsel auf die Wiegeeinrichtung übergeben werden soll.

### WEGE ZUR AUSFÜHRUNG DER ERFINDUNG

Von einer lediglich schematisch dargestellten Maschine 10 zum Füllen und Verschließen von Hartgelatinekapseln 12 führt in einem Bogen, der schematisiert mit einem Pfeil 16 symbolisch dargestellt ist, ein Rohr 14. Dieses Rohr 14 besitzt einen hohlzylindrischen Innendurchmesser, der so groß ist, daß Kapseln 12 in Längsrichtung hintereinanderliegend im Rohr 14 vorhanden sind. Das Rohr 14 könnte auch direkt von unten in einen jeweils schematisch dargestellten Behälter 17 einmünden. In dem Behälter 17 wären dann Kapseln 12 lose eingefüllt vorhanden. Der Behälter 17 würde dann einen Zwischenspeicher für Kapseln 12 darstellen. Aus dem Behälter 17 würde das Rohr 14 dann beispielsweise längs des Pfeils 18 nach unten wegführen. In dem Rohr 14 können die Kapseln 12 mit ihrer dickeren Querschnittshälfte 20 oder mit ihrer dünneren Querschnittshälfte 22 in Förderrichtung nach vorn, d.h. in der Zeichnung nach unten, eingelagert sein.

Das untere Ende 24 des Rohres 14 ist über einem Rohrendstück 26 positioniert. Dieses Rohrendstück 26 besitzt, ebenfalls wie das Rohr 14, einen entsprechenden hohlzylindrischen Querschnitt, so daß die Kapsel 12 frei in das Rohrendstück 26 hineinfallen kann. Unten wird das Rohrendstück 26 von einer Prallplatte 28 verschlossen.

Das Rohrendstück 26 ist in etwa U-förmig ausgebildet. So kragen von der Prallplatte 28 zwei seitliche Kanalwände 30, 32 nach oben, die in ihrem mittleren Bereich die kreiszylindrische mittlere Öffnung 34 mit dem Querschnitt D1 aufweisen. Der Querschnitt D1 entspricht auch dem Innendurchmesser des Rohres 14. Neben der mittleren Öffnung 34 dieses Rohrendstückes 26 ist damit ein Kanal 36, 38 vorhanden, dessen Breite D2 kleiner als D1 ist.

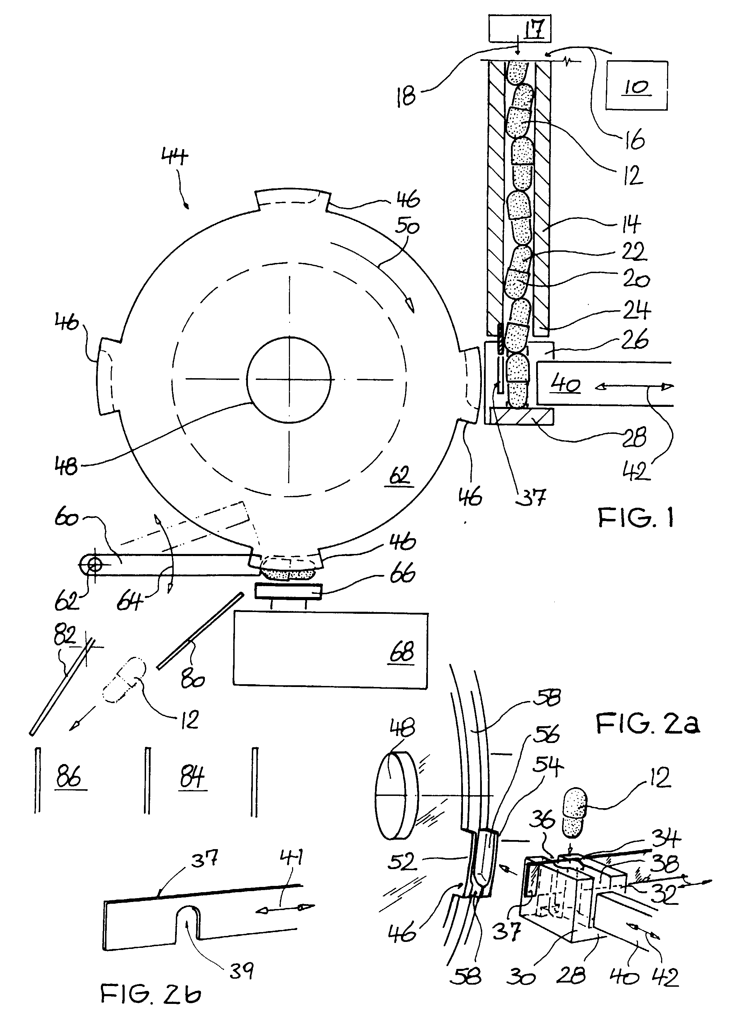

Längs durch den Kanal 36, 38 kann sich ein Schieber 40 hin und her bewegen (Doppelpfeil 42). Bei Bewegung des Schiebers 40 kann die auf der Prallplatte 28 in der mittleren Öffnung 34 einsitzende Kapsel 12 bezüglich Fig. 1 nach links durch den Kanal 36 hindurchgeschoben werden. Da der Kanal 36 querschnittsmäßig schmaler ist als es dem maximalen Außendurchmesser der Kapsel 12 entspricht, wird die Kapsel im Bereich des Kanals 36 zusammengedrückt.

Vor dem Eingang des Kanals 36 ist ein Querschieber 37 vorhanden, der den Zutritt in den Kanal 36 aus Richtung des Rohrendstückes 26 versperrt beziehungsweise nicht versperrt. Der Querschieber 37 besitzt eine Aussparung 39. Durch Hin- und Herbewegen (Doppelpfeil 41) des Querschiebers 37 in der zu der Hin- und Herbewegung des Schiebers 40 (Doppelpfeil 42) senkrechten Richtung, kann der Querschieber 37 mit seiner Aussparung 39 vor den Kanal 36 positioniert werden. Es ist dann möglich, mittels des Schiebers 40 eine Kapsel gleichsam durch den Querschieber hindurch in den Kanal 36 hinein zu transportieren. Der Querschieber 37 in seiner sonstigen, den Kanal 36 verschließenden Stellung verhindert, daß sich eine in dem Rohrendstück 26 befindliche Kapsel schiefstellen könnte.

Neben dem Kanal 36 ist ein Klemmrad 44 positioniert. Dieses Klemmrad 44 besitzt im vorliegenden Beispielsfall vier Haltestationen 46, die umfangsmäßig verteilt am Klemmrad 44 vorhanden sind. Das Klemmrad 44 besitzt eine horizontale Drehwelle 48. Das Klemmrad 44 läßt sich mit konstanter Drehgeschwindigkeit in Umdrehungsrichtung (Pfeil 50) antreiben.

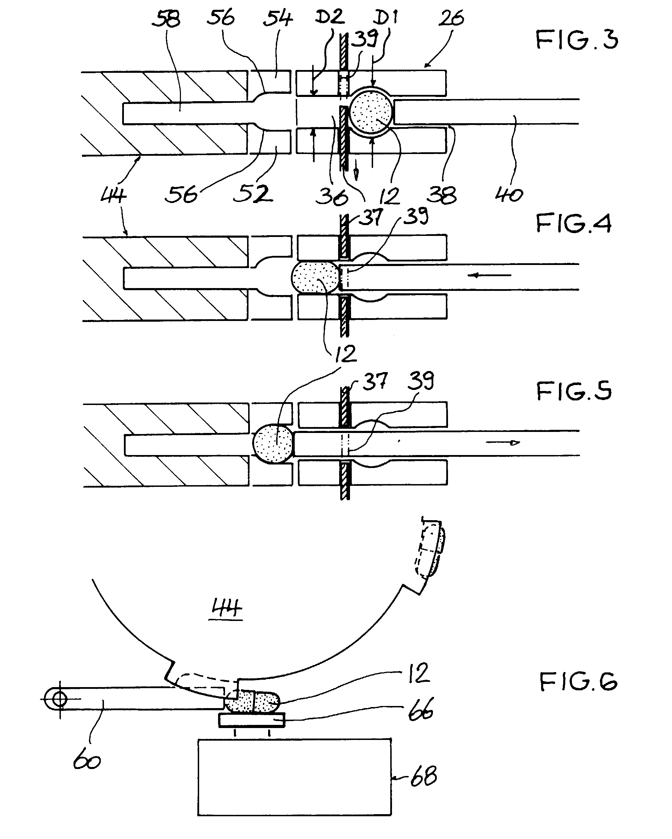

Jede der Haltestationen 46 besitzt zwei seitliche Klemmwände 52, 54 (Fig. 2). Diese beiden Klemmwände besitzen in ihrem mittleren Bereich eine seitlich auswölbende Taschenausbildung 56. Der zwischen ihnen vorhandene mittlere Spalt 58 ist so breit, daß ein Schwenkglied 60 (Fig. 1) in dem Spalt 58 hin und her bewegt werden kann. Außerdem besitzt das Klemmrad 44 in einem äußeren kreisringförmigen Bereich 62 ebenfalls diesen umlaufenden Spalt, da das Schwenkglied 60 auch in diesem Bereich 62 frei eintauchen muß, wie noch weiter unten dargestellt wird.

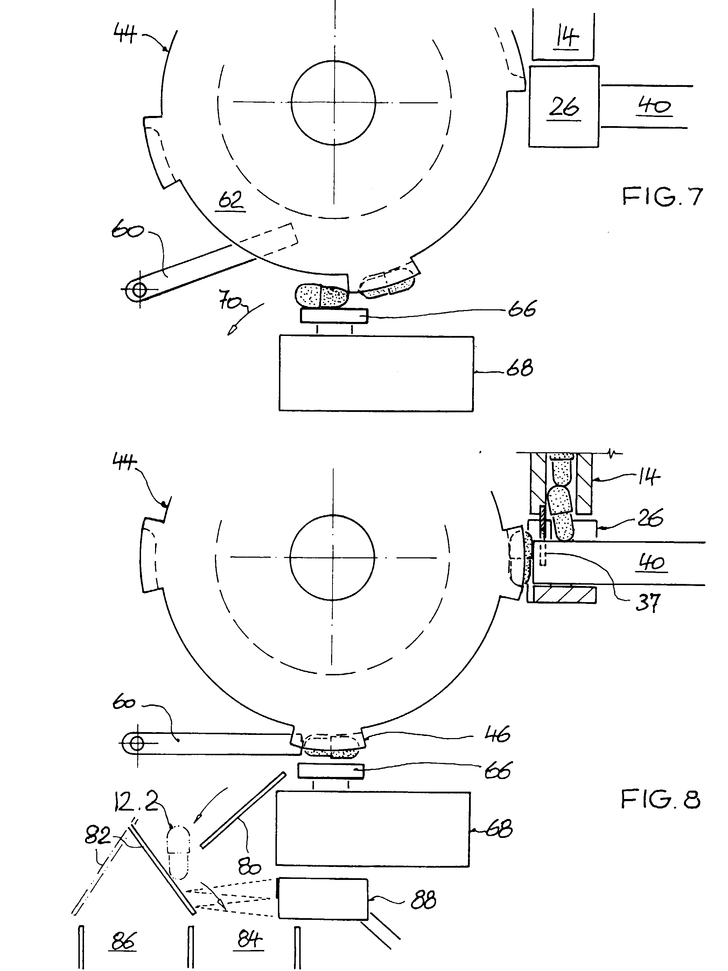

Die Übergabe von Kapseln 12 aus dem Rohrendstück 26 in eine Haltestation 46 hinein erfolgt auf folgende Weise. Mit Hilfe des Schiebers 40 wird eine auf der Prallplatte 28 vorhandene Kapsel 12 so in der Zeichnung nach links durch den Kanal 36 hindurchgeschoben, daß sie dann in den Bereich der Haltestation 46 gelangt, wenn die Haltestation 46 genau ihre in Fig. 1 dargestellte Position bezüglich des Rohrendstücks 26 eingenommen hat (Fig. 3, 4). Die im Querschieber 37 befindliche Aussparung 39 befindet sich genau vor dem Kanal 36, wenn die Kapsel 12 durch den Schieber 40 in den Kanal 36 hineingeschoben werden soll, beziehungsweise wenn der Schieber 40 sich im Bereich des Kanals 36 befindet (Fig. 4, 5). Die Kapsel 12, die im übrigen in dem Rohrendstück 26 im Bereich der mittleren Öffnung 34 frei einlagert, wird längs des Kanals 36 zusammengequetscht und springt gleichsam in den Bereich der Haltestation 46 zwischen deren beiden seitlichen Klemmwänden 52, 54 hinein. Im Bereich zwischen den Klemmwänden 52, 54 entspannt sich die Kapsel wieder etwas und lagert sich dadurch an den Innenseiten der seitlichen Klemmwände 52, 54 an (Fig. 5). Das Übergeben von Kapseln in die Haltestation 46 und damit auf das Klemmrad 44 verursacht somit keine reibenden Bremskräfte für das Klemmrad 44.

Der Schieber 40, der taktweise bewegt wird, kann zum Erzeugen von nicht mit Kapseln gefüllten Haltestationen 46 über einen oder mehrere Taktzyklen angehalten werden. In diesen Zeiträumen kann die Wiegeeinrichtung überprüft und gegebenenfalls nachtariert werden.

Sofern die mit einer Kapsel 12 besetzte Haltestation 46 ihre Position über der Lagerplatte 66 einer Wiegeeinrichtung 68 eingenommen hat, d.h. sich genau oberhalb dieser Lagerplatte 66 befindet (Fig. 1), wird das Schwenkglied 60 in den Spalt 58 der Haltestation 46, vor die Kapsel 12, bewegt. Das Schwenkglied 60 ist um eine Achse 62 entsprechend verschwenkbar (Doppelpfeil 64). Die Schwenkbewegung des Schwenkgliedes 60 erfolgt vorzugsweise zwangsgesteuert, da die Schwenkbewegung zu einem exakt einzuhaltenden Zeitpunkt beginnen und enden muß.

Das Schwenkglied 60 stört damit nicht die Weiterbewegung der Haltestation 46 in deren kontinuierlicher Umlaufbewegung (Pfeil 50), so wie dies in Fig. 6 dargestellt ist. Es wird lediglich die weitere Umlaufbewegung der Kapsel 12 angehalten. Die Kapsel 12 fällt damit im freien Fall mit geringer Fallhöhe von oben auf die Lagerplatte 66 auf. Der durch diese Fallbewegung verursachte Störeffekt ist in seiner Größe sehr gering und konstant in senkrechter Richtung, so daß der dadurch bewirkte Störeinfluß für den Wiegevorgang leicht kompensiert werden kann.

Nach Beendigung des Wiegevorganges gelangt die in einer nachfolgenden Haltestation 46 eingelagerte Kapsel in den Bereich der Lagerplatte 66. Von dem in Bewegungsrichtung 50 vorderen Bereich der Haltestation 46 wird die auf der Lagerplatte 66 auflagernde Kapsel 12 in Richtung des Pfeils 70, in der Zeichnung der Fig. 7 nach links, weggeschoben. Um dieses Wegschieben der Kapsel 12 von der Lagerplatte 66 zu ermöglichen,
ist das Schwenkglied 60 im Gegenuhrzeigersinn längs des Doppelpfeils 64 in den Bereich 62 des Klemmrads 44 weggeschwenkt worden.

Nachdem die Kapsel 12 von der Lagerplatte 66 wegbewegt und beispielsweise längs einer schrägen Bahn 80 nach unten hinuntergerutscht ist, ist die in Fig. 1 und 8 dargestellte Situation vorhanden: das Schwenkglied 60 ist nach unten verschwenkt und sorgt dafür, daß die nächste Kapsel 12 auf der Lagerplatte 66 aufgelagert werden kann

Schräg unterhalb der schrägen Bahn 80 ist eine weitere schräge Bahn 82 positioniert (Fig. 1, 8). Eine als Ausschuß registrierte Kapsel 12.2 (Fig. 8) kann dadurch in einen rechten Sammelbehälter 84 hineingefüllt werden, während von der Wiegeeinrichtung 68 als "gut" registrierte Kapseln (Fig. 1) durch entsprechend andere Verschwenkung der schrägen Bahn 82 in ein anderes Behältnis 86 eingelagert werden können.

Unterhalb der Wiegeeinrichtung 68 ist eine optische Überwachungseinrichtung in Form eines Lichttasters 88 vorhanden. Eine auf der schrägen Bahn 82 befindliche Kapsel 12.2, die als "schlecht" durch die Wiegeeinrichtung 68 erkannt worden ist, kann durch diese Überwachungseinrichtung 88 registriert beziehungsweise festgestellt werden. In dem in Fig. 8 dargestellten Beispielsfall wird mittels des Lichttasters 88 auf der schrägen Bahn 82 die Schlecht-Kapsel 12.2 erkannt, wenn sie sich im unteren Bereich dieser schrägen Bahn 82 befindet. Von dem Lichttaster 88 ausgehende Lichtstrahlen werden durch die Kapsel 12.2 reflektiert, was ein entsprechendes elektrisches Signal auslöst. Durch Weiterverarbeitung dieses elektrischen Signals kann dann die Kapsel 12.2 im unteren Bereich der schrägen Bahn 82 festgestellt werden. Dadurch wird einerseits registriert, daß die Bewegung der schrägen Bahn 82 aus ihrer strichpunktiert dargestellten Lage in ihre durchgezogen gezeichnete andere Schwenklage erfolgt ist und es kann darüberhinaus festgestellt werden, daß die als "schlecht" erkannte Kapsel sich auch auf ihrem Weg in den Sammelbehälter 84 befindet und sich nicht etwa im Bereich der Bahn 80 oder der schrägen Bahn 82 verklemmt hat und dadurch den Weitertransport von nachkommenden Kapseln versperrt. Auf diese Weise ist eine 100prozentige Möglichkeit zum sicheren Aussortieren der als "schlecht" erkannten Kapseln möglich. Ein Vermischen dieser "schlechten" Kapseln 12.2 mit "guten", d. h. beispielsweise richtig gewogenen Kapseln, ist folglich ausgeschlossen.

## Patentansprüche

1. Vorrichtung zum Wiegen von mit einer vorgegebenen Menge an Füllgut gefüllten und verschlossenen Hartgelatinekapseln (12) mit
- einer Wiegeeinrichtung (68) zum Überprüfen des Gewichts der Kapseln,
- einer Zuführeinrichtung für die Kapseln (12) zur Wiegeeinrichtung (68) hin, die eine hohlzylindrische Führungsbahn (14) enthält, längs der die Kapseln (12) in Reihe hintereinanderliegend positionierbar sind,
- einer Übergabevorrichtung (26, 44, 60) zwischen der hohlzylindrischen Führungsbahn (14) und der Wiegeeinrichtung (68), durch die von der Führungsbahn (14) nacheinander übernommene Kapseln (12) an die Wiegeeinrichtung (68) übergebbar sind,
**dadurch gekennzeichnet, daß**
- die Übergabevorrichtung (26, 44, 60) so zur Wiegeeinrichtung (68) positioniert ist, daß die Übergaberichtung der Kapseln (12) auf die Wiegeeinrichtung (68) senkrecht zur Auflagerfläche (66) der Wiegeeinrichtung (68) ausgerichtet ist,
- die Übergabevorrichtung einen endlos umlaufenden Förderer (44) besitzt, der zumindest eine Aufnahmeeinrichtung (46, 26) und zumindest eine Abgabeeinrichtung (46, 60) für von der Zuführeinrichtung aufzunehmende und an die Wiegeeinrichtung (68) abzugebende Kapseln (12) besitzt,
- die Kapseln (12) in der Aufnahmeeinrichtung (46) klemmend haltbar sind.

2. Vorrichtung nach Anspruch 1,
**dadurch gekennzeichnet, daß**
- die Übergabevorrichtung einen Führungskanal (36) besitzt, der zwischen der hohlzylindrischen Führungsbahn (14) und der Aufnahmeeinrichtung (46) des endlos umlaufenden Förderers (44) positioniert ist,
- ein Schubglied (40) vorhanden ist, durch das Kapseln (12) nacheinander durch den Führungskanal (36) hindurch in Aufnahmeeinrichtungen (46) des Förderers (44) transportierbar sind,
- die Breite (D2) des Führungskanals (36) kleiner ist als der Durchmesser der Kapseln (12), so daß die Kapseln längs dem Führungskanal (36) zusammengedrückt vorhanden sind,
- die Breite (D2) des Führungskanals (36) kleiner ist als die Breite der Aufnahmeeinrichtung (46, 52, 54), so daß die Kapseln (12) in der Aufnahmeeinrichtung (46) weniger stark als in dem Führungskanal (36) zusammengedrückt vorhanden sind.

3. Vorrichtung nach Anspruch 2,
**dadurch gekennzeichnet, daß**
- das Schubglied (40) über beliebig viele Taktzyklen in seiner Bewegung (42) anhaltbar ist.

4. Vorrichtung nach einem der vorstehenden Ansprüche,
**dadurch gekennzeichnet, daß**
- die Abgabeeinrichtung ein Sperrglied (60) enthält, das in den Weg der sich mit dem Förderer (44) fortbewegenden Aufnahmeeinrichtung (46) so positionierbar ist, daß die weitere Bewegung der Aufnahmeeinrichtung (46) in Richtung (50) des sich fortbewegenden Förderers (44) möglich, die weitere Bewegung der in dieser Aufnahmeeinrichtung vorhandenen Kapsel (12) in dieser Richtung (50) dagegen nicht möglich ist, so daß diese Kapsel auf der senkrecht unter ihr positionierten Wiegeeinrichtung (66, 68) frei auflagerbar ist.

5. Vorrichtung nach Anspruch 4
**dadurch gekennzeichnet, daß**
- der Förderer (44) mit der Abgabeeinrichtung so an der Wiegeeinrichtung (68) positionierbar ist, daß eine auf der Wiegeeinrichtung (66, 68) auflagerbare Kapsel (12) von der nächsten der in den Bereich der Wiegeeinrichtung gelangenden Aufnahmeeinrichtung (46) aus dem Bereich der Wiegeeinrichtung (66, 68) wegbewegbar ist.

6. Vorrichtung nach einem der vorstehenden Ansprüche,
**dadurch gekennzeichnet, daß**
- die hohlzylindrische Führungsbahn (14) mit ihrem von der Zuführeinrichtung weggerichteten Ende in einem Vorratsbehälter (17) für Kapseln (12) einmündbar ist,
- die hohlzylindrische Führungsbahn (14) in der Art eines Teleskoprohres ausgebildet ist.

7. Vorrichtung nach einem der vorstehenden Ansprüche 1 bis 5,
**dadurch gekennzeichnet, daß**
- die hohlzylindrische Führungsbahn (14) mit ihrem von der Zuführeinrichtung weggerichteten Ende mit einer Kapselfüll- und Verschließmaschine (10) koppelbar ist.

8. Vorrichtung nach Anspruch 7,
**dadurch gekennzeichnet, daß**
- jeder Spur der Kapselfüll- und Verschließmaschine (10), in der Kapseln gefüllt werden können, eine separate Wiegeeinrichtung (68) zugeordnet ist, so daß alle Kapseln dieser Spur gewogen und ausgewertet werden können.

9. Vorrichtung nach Anspruch 7 oder 8,
**dadurch gekennzeichnet, daß**
- Stellglieder an der Kapselfüll- und Verschließmaschine (10) vorhanden sind, durch die in Abhängigkeit von dem jeweiligen Wiegeergebnis Einfluß auf den Füllprozeß der Kapseln nehmbar ist.

10. Vorrichtung nach einem der Ansprüche 2 bis 9,
**dadurch gekennzeichnet, daß**
- eine Verschließvorrichtung für den Führungskanal (36) so vorhanden ist, daß der Eintritt von Kapseln (12) in den Führungskanal (36) möglich oder nicht möglich ist.

11. Vorrichtung nach Anspruch 10,
**dadurch gekennzeichnet, daß**
- die Verschließvorrichtung ein Schiebeglied (37) ist, das quer (41) zur Bewegung (42) des Schiebers (40) verstellbar ist.

12. Vorrichtung nach einem der vorstehenden Ansprüche,
**dadurch gekennzeichnet, daß**
- eine Transportweiche vorhanden ist, mittels der die Wiegeeinrichtung (68) verlassende Kapseln (12) wahlweise in verschiedene Sammelbehälter (84,86) hineintransportierbar sind.

13. Vorrichtung nach Anspruch 12,
**dadurch gekennzeichnet, daß**
- die Transportweiche aus einer in zwei Stellungen bringbaren schrägen Transportbahn (82) besteht.

14. Vorrichtung nach Anspruch 13,
**dadurch gekennzeichnet, daß**
- eine Überwachungseinrichtung vorhanden ist, mittels derer die Anwesenheit von Kapseln (12) an einer vorgegebenen Transportstelle in Transportrichtung hinter der Transportweiche (82) feststellbar ist.

15. Vorrichtung nach Anspruch 14,
**dadurch gekennzeichnet, daß**
- die Überwachungseinrichtung ein optischer Lichttaster (88) ist.

## Claims

1. Device for weighing hard gelatine capsules which have been filled with a predetermined quantity of filling material and sealed, having
- a weighing device (68) for checking the weight of the capsules
- a device for feeding the capsules (12) towards the weighing device (68), which contains a hollow-cylindrical guide path (14), along which the capsules (12) can be positioned in a row one behind the other,
- a device (26, 44, 60) for transfer between the hollow-cylindrical guide path (14) and the weighing device (68), by means of which capsules (12) which have been successively picked up from the guide path (14) can be transferred onto the weighing device (68), characterized in that
- the transfer device (26, 44, 60) is positioned in such a way with respect to the weighing device (68) that the direction in which the capsules (12) are transferred onto the weighing device (68) is perpendicular to the support surface (66) of the weighing device (68),
- the transfer device has an endlessly revolving conveyor (44) which has at least one receiving device (46, 26) and at least one delivery device (46, 60) for capsules (12) which are to be received from the feed device and are to be delivered to the weighing device (68),
- the capsules (12) can be held clamped in the receiving device (46).

2. Device according to Claim 1,
characterized in that
- the transfer device has a guide passage (36) which is positioned between the hollow-cylindrical guide path (14) and the receiving device (46) of the endlessly revolving conveyor (44),
- there is a pusher member (40), by means of which capsules (12) can be successively conveyed through the guide passage (36) into receiving devices (46) of the conveyor (44),
- the width (D2) of the guide passage (36) is less than the diameter of the capsules (12), so that the capsules are compressed along the guide passage (36),
- the width (D2) of the guide passage (36) is less than the width of the receiving device (46, 52, 54), so that the capsules (12) are less strongly compressed in the receiving device (46) than in the guide passage (36).

3. Device according to Claim 2,
characterized in that
- the movement (42) of the pusher member (40) can be stopped for any desired number of cycles.

4. Device according to one of the preceding claims,
characterized in that
- the delivery device contains a blocking member (60) which can be positioned in the path of the receiving device (46) which is moving along with the conveyor (44) in such a way that the receiving device (46) is able to move further in the direction (50) of the moving conveyor (44), but the capsule (12) inside this receiving device is not able to move further in this direction (50), so that this capsule can be positioned freely on the weighing device (66, 68) which is positioned vertically beneath it.

5. Device according to Claim 4, characterized in that
- the conveyor (44) can be positioned with the delivery device on the weighing device (68) in such a way that a capsule (12) which can be placed on the weighing device (66, 68) can be moved out of the area of the weighing device (66, 68) by the next receiving device (46) which moves into the area of the weighing device.

6. Device according to one of the preceding claims,
characterized in that
- that end of the hollow-cylindrical guide path (14) which is directed away from the feed device can open out into a storage container (17) for capsules (12),
- the hollow-cylindrical guide path (14) is designed in the form of a telescopic tube.

7. Device according to one of the preceding Claims 1 to 5,
characterized in that
- that end of the hollow-cylindrical guide path (14) which is directed away from the feed device can be coupled to a capsule-filling and closure machine (10).

8. Device according to Claim 7,
characterized in that
- each track of the capsule-filling and closure machine (10) in which the capsules can be filled is assigned a separate weighing device (68), so that all the capsules on this track can be weighed and assessed.

9. Device according to Claim 7 or 8,
characterized in that
- there are actuators on the capsule-filling and closure machine (10) which can be used to influence the process of filling the capsules as a function of the particular weighing result.

10. Device according to one of Claims 2 to 9,
characterized in that
- a device for closing the guide passage (36) is provided in such a way that it is possible or impossible for capsules (12) to enter the guide passage (36).

11. Device according to Claim 10,
characterized in that
- the closure device is a slide member (37) which can be displaced transversely (41) with respect to the movement (42) of the slide (40).

12. Device according to one of the preceding claims,
characterized in that
- there is a conveyor shunt, by means of which capsules (12) leaving the weighing device (68) can be conveyed into various collection containers (84, 86) as desired.

13. Device according to Claim 12,
characterized in that
- the conveyor shunt comprises an inclined conveyor path (82) which can be moved into two positions.

14. Device according to Claim 13,
characterized in that
- there is a monitoring device, by means of which it is possible to detect the presence of capsules (12) at a predetermined conveying location downstream of the conveyor shunt (82) in the conveying direction.

15. Device according to Claim 14,
characterized in that
- the monitoring device is an optical light scanner (88).

## Revendications

1. Dispositif pour peser des capsules (12) en gélatine dure, remplies d'une quantité prédéfinie de produit et fermées, comprenant :
- un dispositif de pesage (68) pour contrôler le poids des capsules,
- un dispositif d'alimentation, destiné à apporter les capsules (12) au dispositif de pesage (68) et comprenant une voie de guidage (14) cylindrique creuse, le long de laquelle les capsules (12) peuvent être positionnées en une rangée les unes à la suite des autres,
- un dispositif de remise (26, 44, 60), disposé entre la voie de guidage (14) cylindrique creuse et le dispositif de pesage (68), et par lequel des capsules (12) successivement prélevées de la voie de guidage (14) peuvent être remises au dispositif de pesage (68),
**caractérisé** en ce que :
- le dispositif de remise (26, 44, 60) est positionné par rapport au dispositif de pesage (68) de telle sorte que la direction de remise des capsules (12) au dispositif de pesage (68) est orientée perpendiculairement à la surface porteuse (66) du dispositif de pesage (68),
- le dispositif de remise possède un convoyeur (44) circulant sans fin, qui possède au moins un dispositif récepteur (46, 26) et au moins un dispositif délivreur (46, 60) de capsules (12) à recevoir du dispositif d'alimentation et délivré au dispositif de pesage (68),
- les capsules (12) peuvent être maintenues par serrage dans le dispositif récepteur (46).

2. Dispositif selon la revendication 1, **caractérisé** en ce que
- le dispositif de remise possède un canal de guidage (36), qui est positionné entre la voie de guidage (14) cylindrique creuse et le dispositif récepteur (46) du convoyeur (44) circulant sans fin,
- un organe pousseur (40) est présent, par lequel des capsules (12) peuvent être successivement transportées, à travers le canal de guidage (46), dans des dispositifs récepteurs (46) du convoyeur (44),
- la largeur (D2) du canal de guidage (36) est inférieure au diamètre des capsules (12), de sorte que les capsules sont présentes le long du canal de guidage (36) à l'état comprimé,
- la largeur (D2) du canal de guidage (36) est inférieure à la largeur du dispositif récepteur (46, 52, 54), de sorte que les capsules (12) sont présentes dans le dispositif récepteur (46) à un état moins fortement comprimé que dans le canal de guidage (36).

3. Dispositif selon la revendication 2, **caractérisé** en ce que le mouvement (42) de l'organe pousseur (40) peut être arrêté pendant un nombre quelconque de cycles.

4. Dispositif selon une des revendications précédentes, **caractérisé** en ce que le dispositif délivreur comprend un organe de blocage (60), qui peut être positionné dans la voie du dispositif récepteur (46) avançant avec le convoyeur (44) de telle sorte que la poursuite du déplacement du dispositif récepteur (46) dans la direction (50) du convoyeur avançant (44) est possible, tandis que la poursuite du déplacement dans cette direction (50) de la capsule (12) présente dans ce dispositif récepteur n'est pas possible, de sorte que cette capsule peut être librement posée sur le dispositif de pesage (66, 68) qui est positionné verticalement en dessous d'elle.

5. Dispositif selon la revendication 4, **caractérisé** en ce que le dispositif délivreur du convoyeur (44) peut être positionné par rapport au dispositif de pesage (68) de telle sorte qu'une capsule (12) pouvant être posée sur le dispositif de pesage (66, 68) peut être éloignée de la région du dispositif de pesage (66, 68) par le dispositif récepteur (46) suivant arrivant dans la région du dispositif de pesage (66, 68).

6. Dispositif selon une des revendications précédentes, **caractérisé** en ce que :
- la voie de guidage (14) cylindrique creuse peut, par son extrémité éloignée du dispositif d'alimentation, déboucher dans un récipient (17) de stockage de capsules (12),
- la voie de guidage (14) cylindrique creuse est réalisée à la manière d'un tube télescopique.

7. Dispositif selon une des revendications précédentes 1 à 5, **caractérisé** en ce que la voie de guidage (14) cylindrique creuse peut, par son extrémité éloignée du dispositif d'alimentation, être accouplée à une machine (10) de remplissage et de fermeture de capsules.

8. Dispositif selon la revendication 7, **caractérisé** en ce qu'un dispositif de pesage séparé (68) est associé à chaque voie de la machine (10) de remplissage et de fermeture de capsules dans laquelle des capsules peuvent être remplies, de sorte que toutes les capsules de cette voie peuvent être pesées et évaluées.

9. Dispositif selon la revendication 7 ou 8, **caractérisé** en ce que des organes de commande sont présents sur la machine (10) de remplissage et de fermeture de capsules, qui permettent d'exercer une influence sur le processus de remplissage des capsules en fonction du résultat respectif du pesage.

10. Dispositif selon une des revendications 2 à 9, **caractérisé** en ce qu'un dispositif de fermeture pour le canal de guidage (36) est présent de telle sorte que l'entrée de capsules (12) dans le canal de guidage (36) est possible ou non.

11. Dispositif selon la revendication 10, **caractérisé** en ce que le dispositif de fermeture est un organe coulissant (37) qui peut être déplacé transversalement (41) au déplacement (42) du coulisseau (40).

12. Dispositif selon une des revendications précédentes, **caractérisé** en ce qu'un aiguillage est présent, au moyen duquel les capsules (12) quittant le dispositif de pesage (68) peuvent être transportées au choix dans différents récipients collecteurs (84, 86).

13. Dispositif selon la revendication 12, **caractérisé** en ce que l'aiguillage consiste en une voie de transport inclinée (82) pouvant être amenée dans deux positions.

14. Dispositif selon la revendication 13, **caractérisé** en ce qu'un dispositif de surveillance est présent, qui permet de constater la présence de capsules (12) en un endroit prédéfini en aval de l'aiguillage (82) dans la direction de transport.

15. Dispositif selon la revendication 14, **caractérisé** en ce que le dispositif de surveillance est un détecteur optique photosensible (88).
